# EUROPEAN PATENT SPECIFICATION

(11) **EP 2 175 149 B1**
(45) Date of publication and mention of the grant of the patent: **12.12.2012**
(21) Application number: 09382200.5
(22) Date of filing: 08.10.2009
(51) Int. Cl.: F16C 11/06

(54) **Locking device of an operating rod to a pedal**
Verriegelungsvorrichtung einer Bestätigungsstange zu einem Pedal
Dispositif de vérrouillage pour la tige fonctionnelle d'une pédale

(30) Priority: 10.10.2008 ES 200802872
(43) Date of publication of application: 14.04.2010
(73) Proprietor: Batz, S.Coop., 48140 Igorre (ES)
(72) Inventor: Burguera Albizuri, Fernando, 48014, BILBAO (ES); Ibañez Moreira, Jesús, 48160, DERIO (ES)
(74) Representative: Igartua, Ismael

(56) References cited:
- EP-A- 0 896 162
- EP-A- 1 669 269
- EP-A- 1 787 878
- EP-A- 1 850 017
- FR-A- 2 878 803

## Description

### TECHNICAL FIELD

This invention relates to a locking device of an operating rod to the pedal arm adapted to a motor vehicle.

### PRIOR ART

There are known pedals for motor vehicles that comprise a pedal arm that rotates in relation to an axis of rotation, an operating rod that operates an actuator, preferably a servo brake or a hydraulic clutch cylinder, when a user exerts a force on said pedal, a support structure connected to said pedal arm, which houses one end of said operating rod in its interior, and a connection member that is fixed to said support structure and which includes elastic retaining means that prevent the operating rod, which passes through said connection member, from accidentally releasing from the connection member. The prior art contains different known locking means for fixing said connection member to the support structure and for releasing it, and different means for retaining the operating rod in relation to the connection member.

EP 0896162A(closest prior art) thus discloses a system for detaching the brake pedal in which the connection member, which is ring-shaped, is fitted in the support structure of the pedal by means of clip-type fixing means, which also allow both said connection member and the operating rod to be disconnected in relation to the support structure. The fixing means comprise hooks in the support structure, these being fixed to projecting flanges disposed on the outer edge of the connection member. The connection member also includes a radial opening that enables the subsequent extraction of the operating rod, once said connection member has been released from the support structure.

On other hand, document FR 2887836 A discloses a system for locking and releasing the operating rod in relation to the pedal arm, wherein the support structure includes respective clamps on one end and to which the connection member is fixed. Said connection member includes a support structure member through which a hole passes, retaining flanges that project out of one of the bases of said support structure member and which retain the operating rod when the end of said operating rod passes through said support structure member, and unlocking flanges, continuous to the retaining flanges, which project out from the opposite base of the support structure member. In order to release the operating rod in relation to the pedal arm it is necessary to press, by clipping, on the unlocking flanges, attracting them each other so that said attraction movement causes the retaining flanges to separate and thereby release the operating rod.

Finally, EP 229350 B1 discloses a locking system that comprises a support structure and a connection member that connects a pedal arm to the corresponding operating rod, the connection member comprising a first part that is fixed to the pedal arm and a second part that is connected by means of a joint to the end of the operating rod, said first part and said second part being capable of forming a single piece. The connection member is fixed to the support structure by means of side stops, with the result that said connection member cannot be detached, which difficult disassembly when there is a piece that requires repair.

### DISCLOSURE OF THE INVENTION

It is the object of the invention to provide a locking device of an operating rod to a pedal adapted to a motor vehicle, as defined in the claims.

The pedal comprises a pedal arm that rotates around an axis of rotation, the operating rod, which transmits an activation force exerted on the pedal arm to an actuator, and the locking device, which fixes said operating rod to the pedal.

The locking device also comprises a support structure that is fixed to the pedal arm, and a connection member that is fixed to the support structure, said support structure comprising retaining means that retain, in a locking position, one end of the operating rod inside the connection member.

Said retaining means ensure there is no play between the end of the operating rod and the connection member.

These and other advantages and characteristics of the invention will be made evident in the light of the drawings and the detailed description thereof.

### DESCRIPTION OF THE DRAWINGS

Figure 1 is a view of an embodiment of a pedal that comprises a locking device of an operating rod according to the invention.
Figure 2 is an exploded view of the locking device of the operating rod to the pedal, shown in Figure 1.
Figure 3 is a first longitudinal cross-section of the locking device shown in Figure 1, in a pre-assembly position in which the operating rod is not in contact with the locking device.
Figure 4 is a second longitudinal cross-section of the locking device shown in Figure 1, in a pre-assembly position in which the operating rod is not in contact with the locking device.
Figure 5 is a third longitudinal cross-section of the locking device shown in Figure 1, in an intermediate position in which the operating rod is in contact with the locking device.
Figure 6 is a fourth longitudinal cross-section of the locking device shown in Figure 1, in an intermediate position in which the operating rod is in contact with the locking device.
Figure 7 is a fifth longitudinal cross-section of the locking device shown in Figure 1, in a locking position in which the operating rod is fixed to the locking device.
Figure 8 is a sixth longitudinal cross-section of the locking device shown in Figure 1, in a locking position in which the operating rod is fixed to the locking device.

### DESCRIPTION OF THE INVENTION

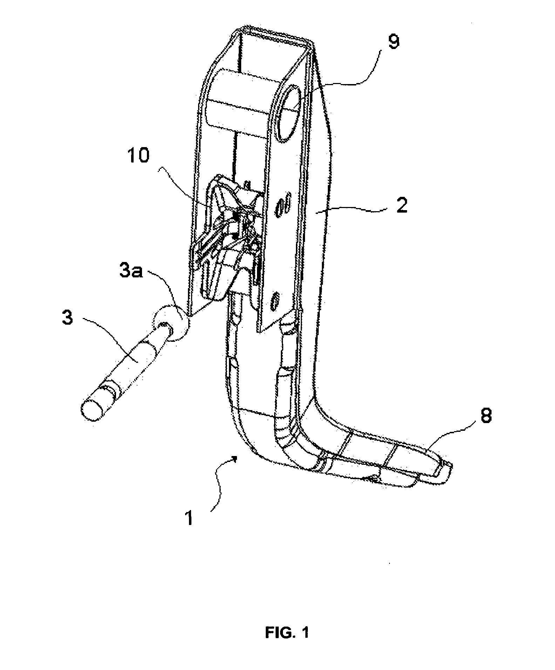

With reference to Figure 1, a pedal 1 for motor vehicles according to the invention comprises a substantially U-shaped pedal arm 2 that rotates around an axis of rotation 9 and which includes a pedal shoe 8 on one end, an operating rod 3 that transmits an activation force exerted by the driver on the pedal shoe 8 to an actuator not shown in the figures, principally a servo brake or a clutch, and a rapid locking device 10 for fixing the operating rod 3 to the pedal arm 2.

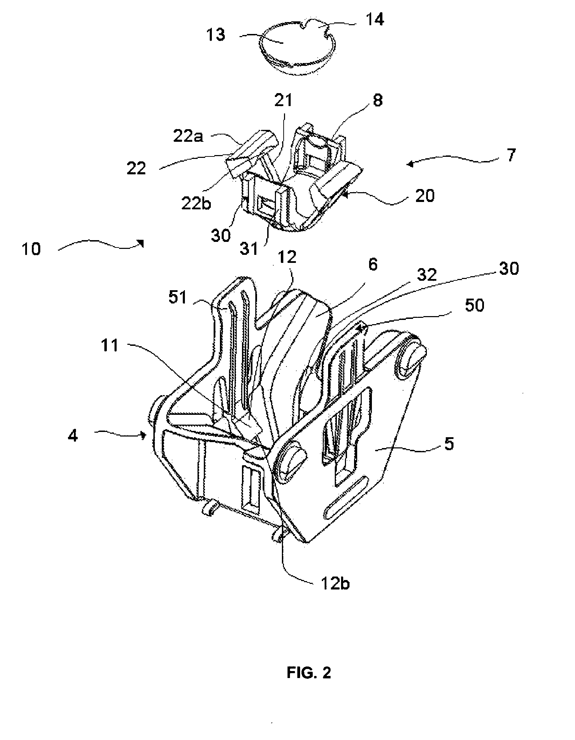

The locking device 10, shown in detail in Figure 2, comprises a substantially prismatic and hollow support structure 4, which is fixed to the pedal arm 2, and a hollow connection member 7, which is fixed to the support structure 4, said support structure 4 comprising retaining means 11 that retain a semi-spherical end 3a of the operating rod 3, not shown in Figure 2, inside the connection member 7, in a locking position.

The retaining means 11 comprise a flexible flange 12 on both of the two longitudinal walls 5 of the support structure 4, disposed substantially parallel and facing each other, each flange 12 extending towards the inside of the connection member 7.

The locking device 10 further comprises intermediate retaining means 20 in the connection member 7, which are pressed, in the locking position, against the end 3a of the operating rod by the retaining means 11 of the support structure 4, thereby preventing any accidental disassembly.

The intermediate retaining means 20 comprise elastic arms 21 that extend towards the outside of the connection member 7 in a direction in which the connection member 7 is inserted in the support structure 4, the elastic arms 21 being disposed facing each other, and each elastic arm 21 comprising a retaining projection 22 in one of the ends. The retaining projection 22 has a substantially flat stop surface 22a that cooperates with a free surface 12b of the corresponding flange 12 in order to fix the connection member 7 in the support structure 4, and a substantially semi-spherical seating 22b upon which is seated the end 3a of the operating rod 3 to form a ball-and-socket joint of said operating rod 3 in relation to the locking device 10 in the locking position. The retaining means 11, in conjunction with the intermediate retaining means 20, ensure that there is contact between the retaining projections 21 and the end 3a of the operating rod 3, preventing any play between them. In addition, the pressure exerted on the end 3a may be controlled in accordance with the shape of the seating 22b.

The locking device 10 also comprises guide means 30, shown in Figure 2, which determine the position of assembly of the connection member 7 in the support structure 4, and which also guide the connection member 7 as it moves along said support structure 4 in a direction of insertion.

Guide means 30 comprise guides 31 in the connection member 7 and guide grooves 32 in the support structure 4, which extend longitudinally in the direction of insertion of the connection member 7, each one of the guides 31 being housed in the corresponding guide groove 32.

Each guide groove 32 is housed in one of the two transverse walls 6 facing said support structure 4, said transverse walls 6 being substantially orthogonal to the longitudinal walls 5 of the support structure 4. In addition, the guides 31 extend towards the outside of the connection member 7 from at least one of the two transverse faces 8 facing said connection member 7. The connection member 7 is thus inserted in the support structure 4 with the result that the transverse faces 8 of the connection member 7 are disposed substantially parallel to the transverse walls 6 of the support structure 4.

In the embodiment shown in Figures 1 to 8, the locking device 10 comprises a semi-spherically shaped contact dome 13 inside which is housed the end 3a of the operating rod 3, the contact dome 13 being fitted to the connection member 7 in the transverse faces 8 of said connection member 7 by means of clip connections 14. In other configurations not shown in the figures the locking device 10 may not include the contact dome 13.

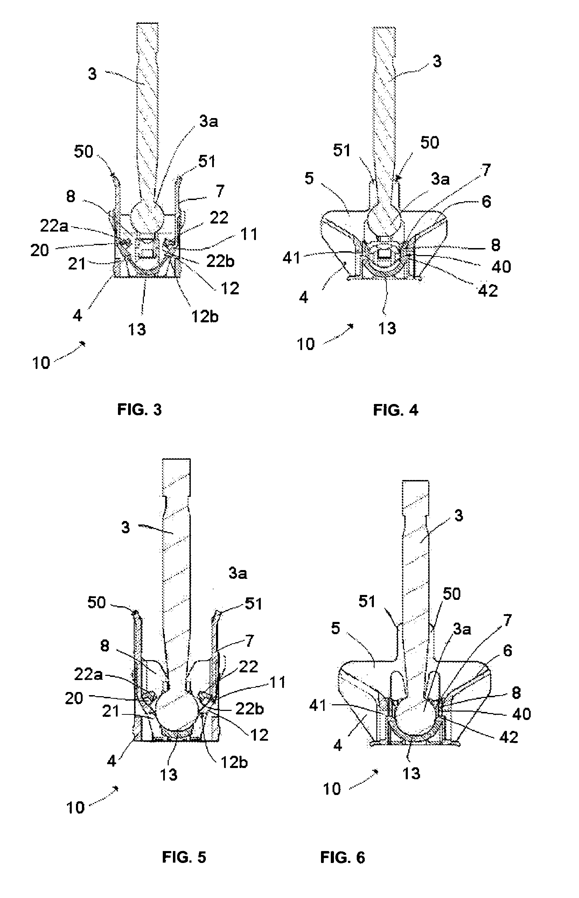

In a first position shown in Figures 3 and 4, in which the operating rod 3 is not in contact with the locking device 10, the connection member 7 is inserted in the support structure 4 in the initial pre-assembly position, with the result that the connection member 7 is disposed fixed to the support structure 4, the object being to prevent any accidental disassembly. To achieve this the locking device 10 comprises pre-assembly means 40, shown in detail in Figures 4,6 and 8, which include a window 41 in at least one of the transverse faces 8 of the connection member 7, and a tab 42 in at least one of the transverse walls 6 of the support structure 4, the tab 42 extending towards the inside of the support structure 4. As a result, in the pre-assembly position, the tab 42 comes up against one of the edges of the window 41, with the connection member 7 being fixed to the support structure 4.

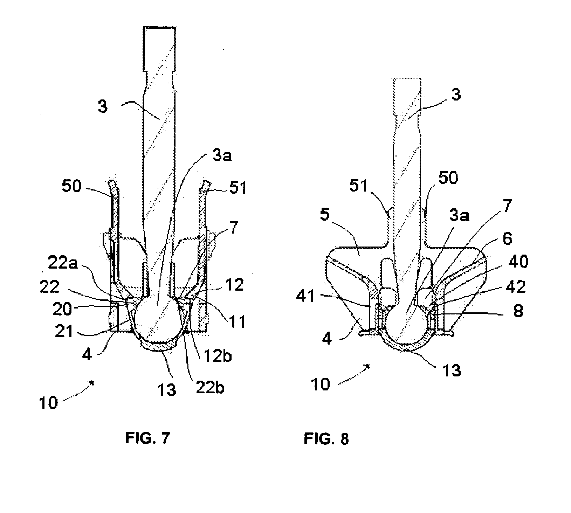

When the end 3a of the operating rod 3 is in contact with the retaining dome 13 or with the connection member 7, in the event that the embodiment does not include the retaining dome 13, it pushes said connection member 7, moving it in relation to the support structure 4 in the direction of insertion, it being guided by the guide means 30, not shown in Figures 3 to 8, and releasing the pre-assembly of the connection member 7 with the support structure 4, as shown in Figures 5 and 6. At the same time, the elastic arms 21 close towards each other until they reach the locking position, shown in Figures 7 and 8. In said locking position, retaining means 11 act against the intermediate retaining means 20 preventing the disassembly of the end 3a of the operating rod 3 in relation to the locking device 10.

Finally, to enable the operating rod 3 to be unhooked quickly in relation to the support structure 4, the locking device 10 comprises, in the support structure 4, rapid release means 50, shown in Figures 2, 3, 5 and 7, which include an extended elastic member 51 for each flange 12, the extended member 51 extending towards the outside of the support structure 4 in the direction in which the connection member 7 is inserted in the support structure 4. As a result, when the extended members 51 are pressed towards each other, towards the inside of the support structure 4, the flanges 12 open towards the outside of said support structure 4, thereby releasing the connection member 7, which moves along the support structure 4 until it reaches the initial pre-assembly position. Parallel to this, the elastic arms 21 of the connection member 7 open outwards during the movement, thereby releasing the end 3a of the operating rod of the locking device 10.

## Claims

1. Locking device of an operating rod (3) to a pedal adapted to a motor vehicle, the pedal comprising a pedal arm (2) that rotates around an axis of rotation (9), and the operating rod (3), which transmits an activation force exerted on the pedal arm (2) to an actuator, and the locking device (1) comprising a support structure (4) that is fixed to the pedal arm (2) and a connection member (7) that is fixed to the support structure (4), the support structure (4) comprising retaining means (11) that retain one end (3a) of the operating rod (3) inside the connection member (7) in a locking position, **characterised in that** the connection member (7) comprises intermediate retaining means (20), which, in the locking position, are pressed against the end (3a) of the operating rod (3) by the retaining means (11) of the support structure (4).

2. Locking device according to the preceding claim, wherein the retaining means (11) comprise at least one flange (12) that extends towards the inside of the support structure (4), and the intermediate retaining means (20) comprise at least one elastic arm (21) that includes a retaining projection (22) that extends towards the inside of the connection member (7), the end (3a) of the operating rod (3) being supported on said retaining projection (22) and said retaining projection (22) coming up against the corresponding flange (12) in the locking position.

3. Locking device according to the preceding claim, wherein the retaining projection (22) comprises a seating (22b) adapted to the shape of the end (3a) of the rod (3).

4. Locking device according to any of the preceding claims, comprising guide means (30) for guiding the movement of the connection member (7) inside the support structure (4) in a direction in which the connection member (7) is inserted in the support structure (4).

5. Locking device according to the preceding claim, wherein the guide means (30) comprise, in the connection member (7), at least one guide (31) that extends axially in the direction in which the connection member (7) is inserted in the support structure (4), and, in the support structure (4), at least one groove (32) that extends axially in said direction of insertion, along which the corresponding guide (31) moves.

6. Locking device according to any of the preceding claims, comprising means (40) for pre-assembling the connection member (7) in the support structure (4) in an initial pre-assembly position.

7. Locking device according to the preceding claim, wherein the pre-assembly means (40) comprise a tab (42) on at least one of the transverse walls (6) of the support structure (4), said tab (42) extending towards the inside of said support structure (4), and a window (41) on at least one of the transverse faces (8) of the connection member (7), with the result that the tab (42) comes up against the corresponding window (41), thereby ensuring that the connection member (7) remains fixed in relation to the support structure (4) in an initial pre-assembly position.

8. Locking device according to any of the preceding claims, comprising rapid release means (50) in the support structure (4).

9. Locking device according to the preceding claim, wherein the rapid release means (50) comprise at least one extended member (51) that extends towards the outside of the support structure (4), continuous to the retaining means (20), with the result that when the extended member (51) is pressed towards the inside of the support structure (4), the retaining means (20) open towards the outside of said support structure (4), thereby releasing the intermediate retaining means (11).

10. Pedal for motor vehicles **characterised in that** it comprises a locking device according to any of the preceding claims.

## Patentansprüche

1. Verriegelungsvorrichtung einer Betätigungsstange (3) zu einem Pedal, angepasst für ein Motorkraftfahrzeug, wobei das Pedal einen Pedalarm (2) umfasst, der sich um eine Rotationsachse (9) dreht, und wobei die Betätigungsstange (3), die eine auf den Pedalarm (2) angelegte Aktivierungskraft an ein Betätigungsglied überträgt, und die Verriegelungsvorrichtung (1) eine Trägerstruktur (4), die am Pedalarm (2) befestigt ist, und ein Verbindungselement (7) umfassen, das an der Trägerstruktur (4) befestigt ist, wobei die Trägerstruktur (4) Haltemittel (11) umfasst, die ein Ende (3a) der Betätigungsstange (3) innerhalb des Verbindungselements (7) in einer Verriegelungsposition halten, **dadurch gekennzeichnet, dass** das Verbindungselement (7) Zwischenhaltemittel (20) umfasst, die in der Verriegelungsposition von den Haltemitteln (11) der Trägerstruktur (4) gegen das Ende (3a) der Betätigungsstange (3) gedrückt werden.

2. Verriegelungsvorrichtung nach dem vorstehenden Anspruch, wobei die Haltemittel (11) zumindest einen Flansch (12) umfassen, der sich zum Inneren der Trägerstruktur (4) erstreckt, und wobei das Zwischenhaltemittel (20) zumindest einen elastischen Arm (21) umfasst, der einen Haltevorsprung (22) enthält, der sich zum Inneren des Verbindungselements (7) erstreckt, wobei das Ende (3a) der Betätigungsstange (3) auf dem Haltevorsprung (22) getragen wird, und wobei der Haltevorsprung (22) in der Verriegelungsposition am entsprechenden Flansch (12) angreift.

3. Verriegelungsvorrichtung nach dem vorstehenden Anspruch, wobei der Haltevorsprung (22) eine Auflagefläche (22b) umfasst, die an die Form des Endes (3a) der Stange (3) angepasst ist.

4. Verriegelungsvorrichtung nach einem der vorstehenden Ansprüche, umfassend Führungsmittel (30) zum Führen der Bewegung des Verbindungselements (7) innerhalb der Trägerstruktur (4) in einer Richtung, bei der das Verbindungselement (7) in die Trägerstruktur (4) eingesetzt ist.

5. Verriegelungsvorrichtung nach dem vorstehenden Anspruch, wobei die Führungsmittel (30) im Verbindungselement (7) zumindest eine Führung (31), die sich axial in der Richtung erstreckt, in der das Verbindungselement (7) in die Trägerstruktur (4) eingesetzt ist, und in der Trägerstruktur (4) zumindest eine Nut (32), die sich axial in die Einsetzrichtung erstreckt, entlang welcher sich die entsprechende Führung (31) bewegt, umfassen.

6. Verriegelungsvorrichtung nach einem der vorstehenden Ansprüche, umfassend Mittel (40) zur Vormontage des Verbindungselements (7) in der Trägerstruktur (4) in einer anfänglichen Vormontageposition.

7. Verriegelungsvorrichtung nach dem vorstehenden Anspruch, wobei die Vormontagemittel (40) eine Lasche (42) auf zumindest einer der Querwände (6) der Trägerstruktur (4), wobei sich die Lasche (42) zum Inneren der Trägerstruktur (4) erstreckt, und ein Fenster (41) auf zumindest einer der Querflächen (8) des Verbindungselements (7) umfassen, wobei die Lasche (42) in der Folge an dem entsprechenden Fenster (41) angreift, wodurch sichergestellt wird, dass das Verbindungselement (7) in Bezug auf die Trägerstruktur (4) in einer anfänglichen Vormontageposition fixiert bleibt.

8. Verriegelungsvorrichtung nach einem der vorstehenden Ansprüche, umfassend Schnell-Freigabe-Mittel (50) in der Trägerstruktur (4).

9. Verriegelungsvorrichtung nach dem vorstehenden Anspruch, wobei die Schnell-Freigabe-Mittel (50) zumindest ein verlängertes Element (51) umfassen, das sich zum Äußeren der Trägerstruktur (4) durchgehend zu den Haltemitteln (20) erstreckt, wobei sich die Haltemittel (20) in der Folge zum Äußeren der Trägerstruktur (4) öffnen, wenn das verlängerte Element (51) zum Inneren der Trägerstruktur (4) gedrückt wird, wodurch die Zwischenhaltemittel (11) freigegeben werden.

10. Pedal für Motorkraftfahrzeuge, **dadurch gekennzeichnet, dass** es eine Verriegelungsvorrichtung nach einem der vorstehenden Ansprüche umfasst.

## Revendications

1. Dispositif de verrouillage d'une tige fonctionnelle (3) d'une pédale adaptée à un véhicule à moteur, la pédale comprenant un bras de pédale (2) qui tourne autour d'un axe de rotation (9), et la tige fonctionnelle (3) qui transmet une force d'activation exercée sur le bras de pédale (2), à un actionneur, et le dispositif de verrouillage (1) comprenant une structure de support (4) qui est fixée au bras de pédale (2) et un élément de raccordement (7) qui est fixé à la structure de support (4), la structure de support (4) comprenant des moyens de retenue (11) qui retiennent une extrémité (3a) de la tige fonctionnelle (3) à l'intérieur de l'élément de raccordement (7) dans une position de verrouillage, **caractérisé en ce que** l'élément de raccordement (7) comprend des moyens de retenue intermédiaires (20) qui, dans la position de verrouillage, sont comprimés contre l'extrémité (3a) de la tige fonctionnelle (3) par les moyens de retenue (11) de la structure de support (4).

2. Dispositif de verrouillage selon la revendication précédente, dans lequel les moyens de retenue (11) comprennent au moins une bride (12) qui s'étend vers l'intérieur de la structure de support (4), et les moyens de retenue intermédiaires (20) comprennent au moins un bras élastique (21) qui comprend une saillie de retenue (22) qui s'étend vers l'intérieur de l'élément de raccordement (7), l'extrémité (3a) de la tige fonctionnelle (3) étant supportée sur ladite saillie de retenue (22) et ladite saillie de retenue (22) rencontrant la bride (12) correspondante dans la position de blocage.

3. Dispositif de verrouillage selon la revendication précédente, dans lequel la saillie de retenue (22) comprend un siège (22b) adapté à la forme de l'extrémité (3a) de la tige (3).

4. Dispositif de verrouillage selon l'une quelconque des revendications précédentes, comprenant des moyens de guidage (30) pour guider le mouvement de l'élément de raccordement (7) à l'intérieur de la structure de support (4) dans une direction dans laquelle l'élément de raccordement (7) est inséré dans la structure de support (4).

5. Dispositif de verrouillage selon la revendication précédente, dans lequel les moyens de guidage (30) comprennent, dans l'élément de raccordement (7), au moins un guide (31) qui s'étend de manière axiale dans la direction dans laquelle l'élément de raccordement (7) est inséré dans la structure de support (4) et, dans la structure de support (4), au moins une rainure (32) qui s'étend de manière axiale dans ladite direction d'insertion, le long de laquelle le guide (31) correspondant se déplace.

6. Dispositif de verrouillage selon l'une quelconque des revendications précédentes, comprenant des moyens (40) pour pré-assembler l'élément de raccordement (7) dans la structure de support (4) dans une position initiale de pré-assemblage.

7. Dispositif de verrouillage selon la revendication précédente, dans lequel les moyens de pré-assemblage (40) comprennent une languette (42) sur au moins l'une des parois transversales (6) de la structure de support (4), ladite languette (42) s'étendant vers l'intérieur de ladite structure de support (4), et une fenêtre (41) sur au moins l'une des faces transversales (8) de l'élément de raccordement (7), qui se traduit par le fait que la languette (42) rencontre la fenêtre (41) correspondante, garantissant ainsi que l'élément de raccordement (7) reste fixe par rapport à la structure de support (4) dans une position initiale de pré-assemblage.

8. Dispositif de verrouillage selon l'une quelconque des revendications précédentes, comprenant des moyens de déblocage rapide (50) dans la structure de support (4).

9. Dispositif de verrouillage selon la revendication précédente, dans lequel les moyens de déblocage rapide (50) comprennent au moins un élément étendu (51) qui s'étend vers l'extérieur de la structure de support (4), ininterrompu jusqu'aux moyens de retenue (20), ce qui se traduit par le fait que lorsque l'élément étendu (51) est comprimé vers l'intérieur de la structure de support (4), les moyens de retenue (20) s'ouvrent vers l'extérieur de ladite structure de support (4), débloquant ainsi les moyens de retenue intermédiaires (11).

10. Pédale pour véhicules à moteur **caractérisée en ce qu'**elle comprend un dispositif de verrouillage selon l'une quelconque des revendications précédentes.
